(19) Europäisches Patentamt
European Patent Office
Office européen des brevets

(11) **EP 4 573 888 A1**

(12) **DEMANDE DE BREVET EUROPEEN**

(43) Date de publication:
**25.06.2025 Bulletin 2025/26**

(51) Classification Internationale des Brevets (IPC):
***A01G 25/16*** *(2006.01)*

(21) Numéro de dépôt: **24221063.1**

(52) Classification Coopérative des Brevets (CPC):
**A01G 25/167**

(22) Date de dépôt: **18.12.2024**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **21.12.2023 FR 2314885**

(71) Demandeur: **Commissariat à l'Energie Atomique et aux Energies Alternatives
75015 Paris (FR)**

(72) Inventeurs:
• **PORTE, Florian
  38054 GRENOBLE (FR)**
• **ALOUI, Saifeddine
  38054 GRENOBLE (FR)**

(74) Mandataire: **Brevalex
Tour Trinity
1 B Place de la Défense
92400 Courbevoie (FR)**

(54) **SYSTEME ET PROCÉDÉ DE PILOTAGE D'UNE INSTALLATION D'IRRIGATION D'UNE EXPLOITATION AGRICOLE**

(57) L'invention porte sur un procédé et un système de pilotage (3) d'une installation d'irrigation (1) d'une exploitation agricole (13), comportant des dispositifs de mesure (5) destinés à mesurer des paramètres relatifs à l'exploitation agricole comprenant des mesures d'humidité sur plusieurs profondeurs du sol, caractérisé en ce qu'il comporte un contrôleur (33) configuré pour contrôler l'irrigation sur la base de comparaisons entre de valeurs courantes d'humidité sur plusieurs profondeurs du sol reçues depuis les dispositifs de mesure (5) et de valeurs courantes correspondantes de seuils adaptatifs tout en tenant compte d'un savoir-faire agricole.

[Fig. 1]

## Description

### DOMAINE TECHNIQUE

La présente invention concerne le domaine d'irrigation d'une exploitation agricole et plus particulièrement, une irrigation prenant en compte les propriétés des sols, les spécificités des cultures, et un savoir-faire agricole.

### ÉTAT DE LA TECHNIQUE ANTÉRIEURE

L'irrigation d'une exploitation agricole dépend de beaucoup de paramètres non tous mesurables. Un des paramètres le plus important est la mesure d'humidité du sol qui varie selon la profondeur.

Actuellement, il est connu des méthodes qui permettent de déclencher l'irrigation d'une exploitation agricole à partir de seuils d'hydrométries du sol.

Une de ces méthodes et la tensiométrie qui mesure une dépression correspondant à la force de succion que la racine doit exercer pour extraire l'eau disponible. Cette méthode est pertinente pour connaître la quantité d'eau disponible pour la plante mais nécessite plusieurs sondes par niveaux de lecture et des opérations de maintenance régulières pour obtenir une information fiable.

La technique la plus répandue pour mesurer l'humidité du sol est la mesure capacitive. Cette dernière est le plus souvent réalisée à partir d'une mesure de fréquence d'un oscillateur LC plongé dans le sol. On notera que la capacité dépend de la permittivité et n'est donc pas une mesure directe de l'humidité. La permittivité peut être reliée à l'humidité à travers des formules empiriques qui dépendent du milieu et de la fréquence de fonctionnement.

Toutefois, la technique de mesure capacitive souffre principalement de la difficulté de calibration liée à la multitude de paramètres d'influences. Ces paramètres d'influences comportent la diversité des textures du sol ; la variété d'interfaces liquide/air/solide selon les milieux; la conductivité du liquide interstitiel (ions dissouts) ; la température ; le tassement et l'homogénéité du milieu; les fissures; la présence et l'activité de matière organiques (par exemple, rhizosphère, mycélium, algues, vers de terres). L'estimation de ces facteurs est limitée par la connaissance de certains paramètres non mesurables, tels que par exemple la conductivité hydraulique à saturation du sol et la rugosité hydraulique de la surface parcellaire. La calibration dépend aussi de la fréquence de mesure et de la texture des sols: un appareil fonctionnant avec une fréquence élevée sera moins sensible à la conductivité mais aura un volume d'analyse plus réduit.

Ainsi, la calibration des capteurs capacitifs se révèle complexe, fastidieuse et spécifique à chaque type de sol. Il est possible de réduire l'influence de certains facteurs en fonction de la fréquence mais différents phénomènes de relaxation couvrent l'ensemble du spectre de fréquences.

Par ailleurs, pour un taux d'humidité donné, l'eau disponible pour les plantes n'est pas la même selon le type de sol. La plupart des capteurs capacitifs dans le commerce fonctionnent à des fréquences de l'ordre de 10 MHz à 100MHz. Ces hautes fréquences sont sensibles à l'eau absorbée par les grains que les plantes ne peuvent pas extraire et sont moins adaptées à mesurer l'eau capillaire disponible pour l'irrigation.

En outre, les conditions d'irrigation sont caractérisées par la dose et la durée d'irrigation en fonction du débit disponible ainsi que d'autres paramètres relatifs par exemple, à la spécificité du sol et sa capacité de stockage qui ont des impacts sur la croissance des plantes selon leur adaptation au milieu.

Cette multitude de paramètres d'influences ne permet d'avoir qu'une vision approximative du profil hydrique en comparaison avec les recommandations elles même génériques.

D'autres techniques d'irrigation utilisent des modèles empiriques basés sur des données météorologiques pour le pilotage des installations d'irrigation. Ces modèles sont essentiellement basés sur l'évapotranspiration qui dépend de la température, de la pression atmosphérique, de la luminosité, du vent, de l'humidité relative, la qualité de l'eau, la radiation solaire et le type de culture.

Ces modèles empiriques restent très limités et ne peuvent donner qu'une représentation statique et très partielle des conditions d'irrigation et de l'état de la culture.

Ainsi, l'objet de la présente invention est de remédier aux inconvénients précités en proposant un procédé et un système de pilotage d'une installation d'irrigation simple à mettre en oeuvre, prenant en compte le savoir-faire agricole sur la spécificité du sol et le type de culture tout en ne nécessitant pas une calibration complexe des capteurs de mesure de l'humidité du sol.

### EXPOSÉ DE L'INVENTION

L'invention a pour objet un système de pilotage d'une installation d'irrigation comportant des dispositifs de mesure destinés à mesurer des paramètres relatifs à l'exploitation agricole comprenant des mesures d'humidité sur plusieurs profondeurs du sol, caractérisé en ce qu'il comporte un contrôleur configuré pour contrôler l'irrigation sur la base de comparaisons entre de valeurs courantes d'humidité sur plusieurs profondeurs du sol reçues depuis les dispositifs de mesure et de valeurs courantes correspondantes de seuils adaptatifs évoluant dans le temps et prenant en compte de manière continue l'évolution des plantes et le savoir-faire agricole spécifique à l'exploitation concernée.

Ceci permet un pilotage d'irrigation en utilisant des capteurs à faible consommation et à bas coût ne nécessitant pas une calibration complexe tout en optimisant les résultats (consommation en eau, volume et qualité de la récolte) selon les spécificités de l'exploitation agricole.

Avantageusement, le contrôleur est configuré pour contrôler le démarrage et l'arrêt de l'irrigation sur la base d'un premier ensemble de seuils adaptatifs de démarrage d'irrigation et d'un deuxième ensemble de seuils adaptatifs d'arrêt d'irrigation, respectivement.

Ceci permet d'ajuster la quantité d'arrosage en fonction de la maturité de la culture qui évolue en fonction de la profondeur des racines.

Avantageusement, les premier et deuxième ensembles de seuils adaptatifs de démarrage et d'arrêt d'irrigation sont représentatifs de premier et deuxième profils hydriques minimal et maximal respectivement, basés sur le type de culture en fonction de la maturité des plantes et le type du sol.

Les valeurs initiales de seuils adaptatifs de démarrage et d'arrêt peuvent être déterminées par des instituts techniques agricoles, des documents techniques d'irrigation, des connaissances académiques, un savoir-faire de l'agriculteur, un modèle basé sur des données météorologiques, des annotations issues des précédentes récoltes etc.

Avantageusement, le contrôleur est configuré pour transmettre une alerte de démarrage ou d'arrêt de l'irrigation à un utilisateur si la comparaison des valeurs courantes d'humidité avec les valeurs courantes correspondantes de seuils adaptatifs de démarrage ou d'arrêt forme une configuration de comparaison courante appartenant à un sous-ensemble spécifique et prédéterminé de configurations de comparaisons.

Avantageusement, le contrôleur est configuré pour mettre à jour les valeurs de seuils adaptatifs de démarrage ou d'arrêt de l'irrigation en fonction des valeurs courantes d'humidité et des valeurs (préconisées de manière générique) de seuils adaptatifs de démarrage ou d'arrêt respectivement.

Ceci permet d'ajuster la quantité d'arrosage en fonction d'un retour d'expérience créant ainsi un système de pilotage évolutif qui ne peut que s'améliorer au cours du temps. Ceci permet également d'éviter la réalisation d'un calibrage sophistiqué, onéreux et quasi-irréaliste des capteurs de mesure.

Avantageusement, les nouvelles valeurs de seuils adaptatifs de démarrage ou d'arrêt sont calculées selon une moyenne arithmétique pondérée.

Avantageusement, le contrôleur est configuré pour commander automatiquement au moins un actionneur de l'installation d'irrigation après une durée prédéterminée au cas où l'alerte n'a pas été validé par l'utilisateur.

Selon un autre mode de réalisation, le contrôleur est configuré pour utiliser les paramètres relatifs à l'exploitation agricole pour générer des valeurs courantes de variables pertinentes relatives à l'irrigation comprenant les valeurs courantes d'humidité sur plusieurs profondeurs du sol, et pour contrôler l'irrigation sur la base de comparaisons entre les valeurs courantes de variables pertinentes relatives à l'irrigation et de valeurs courantes correspondantes de seuils adaptatifs tout en tenant compte du savoir-faire agricole.

Avantageusement, les paramètres relatifs à l'exploitation agricole comportent les paramètres suivants : luminosité, vitesse du vent, pluviométrie, températures et humidités ambiantes, et prévision de précipitation, et en ce que les variables pertinentes relatives à l'irrigation comprennent les valeurs d'humidité sur plusieurs profondeurs du sol, vitesse de variation de l'humidité et de la température selon les différents profondeurs du sol, gradient hydrique, gradient de température, évapotranspiration, réserve d'eau utile, et besoin en nutrition.

Avantageusement, le contrôleur est configuré pour enregistrer les nouvelles valeurs de seuils adaptatifs à chaque démarrage ou arrêt de l'arrosage.

Ainsi, les nouvelles valeurs de seuils adaptatifs peuvent être analysées ultérieurement par un algorithme d'intelligence artificielle.

Avantageusement, le contrôleur est configuré pour déterminer les valeurs initiales $h_{i0}(t)$ de seuils adaptatifs représentatives du profil hydrique $hi0(t)$ le mieux adapté au terrain, à la culture, à la météo et aux objectifs de l'agriculteur en traitant les données de retour d'expérience sur les récoltes.

Ainsi, les nouvelles valeurs de seuils adaptatif peuvent être appliqués l'année suivante pour prendre en compte le retour d'expérience de la culture en cours.

L'invention vise également, une installation d'irrigation d'une exploitation agricole comportant le système de pilotage selon l'une quelconque des caractéristiques précédentes, comportant en outre :

- un ensemble de dispositifs de mesure configurés pour faire des mesures sur les plantes, le sol, et l'air de l'exploitation agricole, et pour transmettre les mesures au système de pilotage, et
- un ensemble d'actionneurs configurés pour actionner ou arrêter l'irrigation selon la commande reçue depuis le système de pilotage.

Selon un mode de réalisation, le dispositif de mesure comporte un tube en matériau isolant équipé de capteurs capacitifs de mesure d'humidité, un module d'alimentation, un module d'acquisition et de traitement et un module de communication.

L'invention concerne aussi un procédé de pilotage d'une installation d'irrigation comportant des dispositifs de mesure destinés à mesurer des paramètres relatifs à l'exploitation agricole comprenant des mesures d'humidité sur plusieurs profondeurs du sol, comportant un control de l'irrigation sur la base de comparaisons entre de valeurs courantes d'humidité sur plusieurs profondeurs du sol reçues depuis les dispositifs de mesure et de valeurs courantes correspondantes de seuils adaptatifs évoluant dans le temps tout en tenant compte de manière continue l'évolution des plantes et d'un savoir-faire agricole.

D'autres avantages et caractéristiques de l'invention apparaîtront dans la description détaillée non limitative ci-dessous.

## BRÈVE DESCRIPTION DES DESSINS

On décrira à présent, à titre d'exemples non limitatifs, des modes de réalisation de l'invention, en se référant aux dessins annexés, dans lesquels :

La Fig. 1 illustre très schématiquement une installation d'irrigation d'une exploitation agricole, selon un mode de réalisation de l'invention ;

La Fig. 2 illustre très schématiquement un dispositif de mesure destiné à être utilisé dans l'exploitation agricole, selon un mode de réalisation de l'invention ; et

Les Figs. 3A et 3B illustrent très schématiquement le système de pilotage selon des phases de démarrage et d'arrêt d'irrigation respectivement, selon un mode de réalisation préféré de la présente invention ; et

Les Figs. 4A et 4B illustrent très schématiquement le système de pilotage selon des phases de démarrage et d'arrêt d'irrigation respectivement, selon un autre mode de réalisation préféré de la présente invention.

## EXPOSÉ DÉTAILLÉ DE L'INVENTION

Le principe de l'invention est d'utiliser de seuils adaptatifs tenant compte d'un savoir-faire agricole et prenant en compte de manière continue l'évolution des plantes.

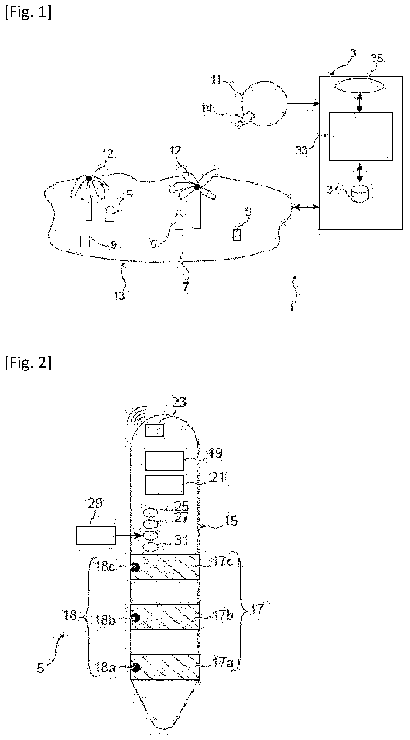

La Fig. 1 illustre très schématiquement une installation d'irrigation d'une exploitation agricole, selon un mode de réalisation de l'invention.

L'installation d'irrigation 1 comporte un système de pilotage 3, un ensemble de dispositifs de mesure 5 pour mesurer l'humidité du sol 7, un ensemble d'actionneurs 9 pour actionner le démarrage ou l'arrêt de l'irrigation et éventuellement, un système d'observation 11.

Le système de pilotage 3 comporte un contrôleur 33 (par exemple, un calculateur) configuré pour interagir avec les dispositifs de mesure 5 et actionneurs 9. Le système de pilotage 3 peut comporter également une base de données 37 comprenant différentes données relatives à des informations sur l'irrigation agricole ainsi qu'un réseau de neurone 35.

Les dispositifs de mesure 5 sont destinés à être partiellement enfoncés dans le sol 7 de l'exploitation agricole afin de mesurer l'humidité du sol en fonction de la profondeur.

Eventuellement, les dispositifs de mesure 5 peuvent également être configurés pour faire des mesures sur les plantes 12, le sol 7, et l'air de l'exploitation agricole 13 et pour transmettre toutes les mesures au système de pilotage 3.

Le système d'observation 11 peut comporter des caméras 14 et/ou capteurs d'observation pour prendre des images et/ou observations sur l'état des plantes 12 et du sol 7 de l'exploitation agricole 13. Les caméras 14 et/ou capteurs d'observation peuvent être installés dans différents endroits de l'exploitation agricole 13. En variantes, des drones comprenant des caméras et/ou capteurs d'observation peuvent aussi être utilisés pour surveiller l'évolution de l'exploitation agricole. Le système d'observation 11 est adapté pour transmettre à l'utilisateur des images et/ou observations sur l'état de l'exploitation agricole 13. Dans ce cas, le système d'observation 11 peut venir en complément des observations directes faites par l'agriculteur. Par ailleurs, une intelligence artificielle IA adaptée peut être utilisée pour extraire des indicateurs (par exemple couleur, surface, et orientation foliaire) sur l'état des plantes.

La Fig. 2 illustre très schématiquement un dispositif de mesure destiné à être utilisé dans l'exploitation agricole, selon un mode de réalisation de l'invention.

Selon ce mode de réalisation, le dispositif de mesure 5 comporte un tube 15 en matériau isolant équipé de capteurs de mesure 17 et 18 d'humidités 17a, 17b, 17c et températures 18a, 18b, 18c respectivement, un module d'alimentation 19, un module d'acquisition et de traitement 21 et un module de communication 23.

Le matériau isolant du tube 15 peut être en PVC, PET, polycarbonate, verre, céramique, etc. La longueur du tube 15 dépends de la profondeur du réseau racinaire de la plante. Le nombre de capteurs 17a, 17b, 17c et 18a, 18b, 18c dépend de la longueur du tube 15 et donc également de la profondeur des racines de la plante.

Chaque capteur 17a, 17b, 17c de mesure d'humidité est avantageusement un capteur capacitif comportant un circuit électrique résonant dont la fréquence de résonance est représentative d'une mesure de permittivité qui est transformée via des formules empiriques en une mesure de l'humidité du sol. Chaque capteur capacitif 17a, 17b, 17c est avantageusement associé à un capteur de température 18a, 18b, 18c de façon à fournir le profil de température comme indicateur mais aussi de pouvoir corriger la mesure capacitive à chaque niveau car la permittivité dépend de la température.

Le circuit électrique résonant est un circuit inductif-capacitif comprenant une réactance active associée à un élément de couplage passif correspondant. La réactance active est par exemple une paire d'armatures métalliques et l'élément de couplage passif est un élément inductif. La géométrie et configuration des armatures métalliques peuvent être optimisées selon le volume de mesure et la précision souhaitée. Un exemple de capteur capacitif est décrit dans la demande de brevet FR3115111.

Avantageusement, le tube 15 en matériau isolant est équipé de différents types de capteurs 17a, 17b, 17c capacitifs comportant des circuits électriques résonants à différentes fréquences, adaptés pour différents types de cultures et différentes sensibilités.

Eventuellement, le dispositif de mesure 5 peut comporter ou être associé à d'autres capteurs ou sondes comportant un capteur de température ambiante 25, un capteur de mesure de la conductivité 27, une station météo 29, etc.

Les capteurs de température et conductivité sont avantageusement répartis tout au long de la sonde à chaque niveau de mesure d'humidité dans l'objectif de fusionner ces mesures car elles sont interdépendantes.

On notera que la calibration des dispositifs de mesure 5 est faite en usine avec des valeurs approximatives. Il est possible d'améliorer la calibration en utilisant un dispositif de mesure de référence (Tensiomètre ou sonde capacitive calibrée) en saisissant ces valeurs dans l'interface utilisateur du contrôleur. Lorsque le sol subit une sécheresse ou que le sol est saturé en eau il sera également intéressant de noter les valeurs d'humidité correspondantes pour fournir à l'utilisateur un indicateur sur la réserve en eau disponible pour la plante.

Avantageusement, le module d'alimentation 19 comporte un moyen autonome de récupération d'énergie comme par exemple un panneau photovoltaïque ou une micro turbine. En variante, il peut comporter de simples piles électriques ou une batterie rechargeable.

Le module d'acquisition et de traitement 21 est par exemple un microcontrôleur à basse consommation avec une mise en veille. Le microcontrôleur 21 est configuré pour extraire les mesures et données des différents capteurs 17, 18, 25, 27, 29, 31 afin de déterminer des mesures de l'humidité du sol en fonction de la profondeur, des mesures de gradients d'humidité et de température en fonction de la profondeur, des données météo, etc.

Le module de communication 23 est configuré pour communiquer les résultats issus du module d'acquisition et de traitement 21 avec ou sans fils au système de pilotage 3.

Conformément à l'invention, le contrôleur 33 est adapté pour recevoir des mesures courantes d'humidité sur plusieurs profondeurs ou niveaux du sol depuis les dispositifs de mesure 5. Le contrôleur 33 est configuré pour contrôler l'irrigation de l'exploitation agricole 13 sur la base de comparaisons entre les valeurs courantes d'humidité sur plusieurs profondeurs du sol et de valeurs courantes correspondantes de seuils adaptatifs tout en tenant compte d'un savoir-faire agricole sur l'état de stress ou de saturation hydrique des plantes et/ou du sol.

Plus particulièrement, le contrôleur 33 est configuré pour contrôler le démarrage de l'irrigation sur la base d'un premier ensemble de seuils adaptatifs de démarrage de l'irrigation. De même, le contrôleur 33 est configuré pour contrôler l'arrêt de l'irrigation sur la base d'un deuxième ensemble de seuils adaptatifs d'arrêt de l'irrigation.

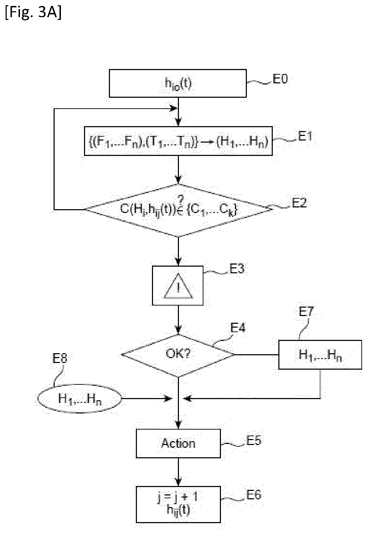

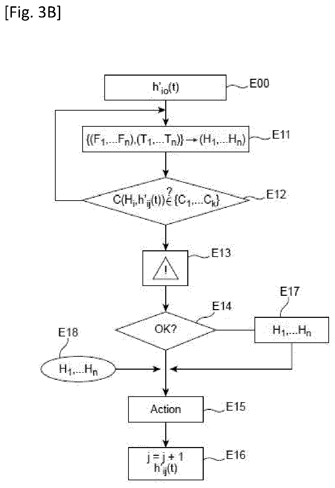

En effet, les Figs. 3A et 3B illustrent très schématiquement le système de pilotage selon des phases de démarrage et d'arrêt d'irrigation respectivement, selon un mode de réalisation préféré de la présente invention.

La Fig. 3A illustre les étapes de pilotage de l'exploitation agricole dans la phase de démarrage de l'irrigation.

L'étape E0 est une étape d'initialisation où les différents paramètres et variables sont définis comme par exemple, les seuils adaptatifs de démarrage initiaux $h_{10}(t),.... h_{i0}(t),..., h_{n0}(t)$ qui seront décrits dans la suite. La saisie des seuils adaptatifs de démarage ainsi que d'autres paramètres ou configurations de comparaison peuvent être réalisée par une interface homme-machine IHM reliée au contrôleur 33 ou à travers une plateforme de supervision.

A l'étape E1, les circuits électriques résonants et capteurs de température d'un dispositif de mesure 5 réalisent des mesures courantes de fréquences $F_1,.... F_i,..., F_n$ et de températures $T_1,.... T_i,..., T_n$ correspondantes sur plusieurs profondeurs du sol référencés par l'indice « i ». Le microcontrôleur 21 du dispositif de mesure 5 réalise un traitement sur les mesures courantes de fréquences et de températures pour déterminer grossièrement les valeurs courantes de l'humidité $H_1,.... H_i,..., H_n$ correspondantes sur les différents profondeurs du sol.

A l'étape E2 le contrôleur 33 reçoit un ensemble de valeurs courantes d'humidité $H_1,.... H_i,..., H_n$ sur plusieurs profondeurs du sol depuis les dispositifs de mesure 5. Le contrôleur 33 réalise une comparaison entre l'ensemble des valeurs courantes d'humidité $H_1,.... H_i,..., H_n$ et un premier ensemble de valeurs courantes correspondantes de seuils adaptatifs de démarrage de l'irrigation $h_{1j}(t),.... h_{ij}(t),..., h_{nj}(t)$. Ce premier ensemble de seuils adaptatifs de démarrage est représentatif d'un premier profil hydrique minimal basé sur le type de culture en fonction de la maturité des plantes et le type du sol. L'indice t est ajouté pour préciser que les seuils adaptatifs de démarrage peuvent évoluer dans le temps t suivant le stade d'évolution de la plante. L'unité du temps t peut être un jour, une semaine ou un mois et la date de départ correspond à la date de plantation. L'indice « j » est un indice de commande désignant le calcul itératif de nouveaux seuils adaptatifs de démarrage. Par exemple, l'indice j=0 correspond aux seuils adaptatifs de démarrage initiaux $h_{10}(t),.... h_{i0}(t),..., h_{n0}(t)$ qui sont prédéterminées (à l'étape E0) à partir d'une ou de plusieurs sources. A titre d'exemple, ces sources peuvent comporter des documents techniques d'irrigation, des connaissances académiques, un savoir-faire de l'utilisateur ou l'agriculteur, un modèle basé sur des données météorologiques, des annotations issues des précédentes récoltes (le volume de la récolte, sa qualité gustative, la consommation d'eau, le traitement des maladies, etc.).

Ainsi, à l'étape E2, pour chaque profondeur d'indice i, la valeur $H_i$ de l'humidité est comparée à la valeur correspondante du seuil adaptatif de démarrage $h_{ij}(t)$. Les différents résultats de ces comparaisons forment un ensemble de configurations de comparaisons différentes C1,...,Cm. Par exemple, une première configuration de comparaison C1 est le cas où chaque valeur $H_i$ de l'humidité est plus petite que la valeur correspondante du seuil adaptatif de démarrage $h_{ij}(t)$. Une autre configuration peut être le cas où la troisième valeur $H_3$ de l'humidité est plus grande que la valeur correspondante du seuil adaptatif de démarrage $h_{3j}(t)$ tandis que toutes les autres valeurs de l'humidité sont plus petites une-à-une que les valeurs correspondantes des seuils adaptatifs de démarrage, etc. On notera qu'un état spécifique de l'état hydrique peut englober plusieurs configurations de comparaisons. Ceci implique que plusieurs configurations de comparaisons critiques peuvent être considérées par un expert comme étant représentatives d'un état hydrique nécessitant l'irrigation. Par exemple, une configuration de comparaison critique peut être celle dans laquelle les valeurs courantes d'humidité à des profondeurs i=1, i=2, et i=3 dépassent les valeurs courantes correspondantes de seuils adaptatifs de démarrage. Une autre plus générale peut être celle dans laquelle les valeurs d'au moins un sous ensemble de valeurs courantes d'humidité dépassent les valeurs courantes correspondantes de seuils adaptatifs de démarrage.

Toutes les configurations critiques peuvent être regroupées dans un sous-ensemble spécifique de configurations de comparaisons C1,...,Ck. Ainsi, si la comparaison des valeurs courantes d'humidité avec les valeurs courantes correspondantes de seuils adaptatifs de démarrage forme une configuration courante appartenant au sous-ensemble spécifique de configurations de comparaisons C1,...,Ck, alors on passe à l'étape E3 et sinon, on revient à l'étape E1 pour réaliser des nouvelles mesures de l'humidité.

A l'étape E3, suite au fait que la configuration courante appartient au sous-ensemble spécifique de configurations, le contrôleur 33 transmet une alerte de démarrage de l'irrigation à l'utilisateur.

A l'étape E4, l'utilisateur peut confirmer ou non l'arrosage selon son savoir-faire sur la base de ses propres observations directes ou issues du système d'observation relatives à l'état des plantes et du sol et/ou selon les données et pronostiques météos. Si l'utilisateur valide l'alerte alors on passe à l'étape E5 et sinon, on passe à l'étape E7.

L'étape E5 concerne le cas où l'utilisateur confirme l'arrosage, alors le contrôleur 33 transmet une commande à au moins un actionneur 9 pour déclencher le démarrage de l'irrigation de l'installation d'irrigation.

A l'étape E6, au moment de l'ouverture des vannes d'arrosage, le contrôleur est configuré pour enregistrer les valeurs courantes d'humidité $H_1$,.... $H_i$,..., $H_n$ de la configuration critique pour calculer de nouvelles valeurs de seuils adaptatifs. Plus particulièrement, l'indice de commande 'j' est incrémenté (i.e. j=j+1) et les nouvelles valeurs $h_{ij}(t)$ de seuils adaptatifs sont déterminées en fonction des valeurs courantes d'humidité $H_i$ et des seuils adaptatifs de démarrage initiaux $h_{i0}(t)$. A titre d'exemple, les nouvelles valeurs $h_{ij}(t)$ de seuils adaptatifs sont calculées selon une moyenne arithmétique pondérée :

$$h_{ij}(t) = aH_i + (1-a)\, h_{i0}(t) \quad \text{où} \ 0 < a \leq 1$$

La valeur du paramètre « a » est paramétrable selon la volonté et l'expérience du cultivateur, elle détermine la dynamique d'adaptation du système. Si le paramètre a est proche de 1 alors le système va privilégier les nouvelles données « terrain » au détriment des données initiales $h_{i0}(t)$ déterminées « à priori ». Sinon, si a est proche de 0 alors le système sera plus « conservateurs » tout en prenant en compte les nouvelles données mais en leur apportant moins d'importance.

Sa valeur peut être modifiée en fonction de la saison et de la maturité des plantes. On notera que dans le cas extrême où a=1, cela signifie que les valeurs $h_{ij}(t)$ de seuils adaptatifs sont tout simplement remplacées par les valeurs courantes d'humidité $H_i$.

On notera qu'en variante, les nouvelles valeurs $h_{ij}(t)$ de seuils adaptatifs peuvent être déterminées en fonction des valeurs courantes d'humidité $H_i$ et des seuils adaptatifs de démarrage précédents $h_{i(j-1)}(t)$. Ces nouvelles valeurs $h_{ij}(t)$ de seuils adaptatifs peuvent aussi être calculées selon une moyenne arithmétique pondérée :

$$h_{ij}(t) = aH_i + (1-a)\, h_{i(j-1)}(t) \quad \text{où} \ 0 < a \leq 1$$

Ainsi, les seuils adaptatifs de démarrage vont se réajuster au fur et à mesure des retours d'expériences créant ainsi un système de pilotage évolutif qui s'améliore dans le temps et permettant ainsi d'éviter la réalisation d'un calibrage sophistiqué, onéreux et quasi-irréaliste des capteurs de mesure.

Avantageusement, les nouvelles valeurs de seuils adaptatifs sont enregistrées pour éventuellement pouvoir être analysées ultérieurement par un algorithme d'intelligence artificielle. L'analyse peut éventuellement être réalisée par le contrôleur en relation avec le réseau de neurone 35.

L'étape E7, concerne le cas où l'utilisateur ne valide pas l'alerte transmise à l'étape E3. En effet, l'utilisateur peut estimer selon son savoir-faire et ses observations que ce n'est pas le moment d'arroser. Dans ce cas, le contrôleur se met en attente pendant une durée prédéterminée « Timeout » (par exemple, de quelques jours) qui peut être définie par un expert selon la nature de la récolte, du sol et de la période de l'année. Deux cas de figures sont possibles. Dans un premier cas, l'utilisateur décide de valider l'alerte avant la fin de la durée prédéterminée. Dans un deuxième cas, la durée prédéterminée est consumée sans que l'utilisateur ait validé l'arrosage. A l'issu de l'un ou de l'autre cas, des nouvelles mesures d'humidité sont réalisées avant de reboucler sur l'étape E5 pour déclencher l'irrigation et pour ensuite déterminer à l'étape E6 de nouvelles valeurs de seuils adaptatifs en fonction de ces nouvelles valeurs couran-

tes d'humidité $H_i$ et les valeurs initiales $h_{i0}(t)$ (ou précédentes $h_{i(j-1)}(t)$) de seuils adaptatifs de démarrage.

L'étape E8 concerne le cas où l'utilisateur prend l'initiative selon sa propre expertise et ses observations de déclencher l'irrigation sans attendre de recevoir une alerte. Dans ce cas de figure également, des nouvelles mesures d'humidité sont réalisées et on passe à l'étape E6 pour déterminer de nouvelles valeurs de seuils adaptatifs.

Au terme de la récolte, le cultivateur peut avantageusement noter un ensemble de critères de réussite : poids de la récolte, qualité gustative (échèle de 1 à 10), présence de maladie ou de ravageurs, consommation en eau ou en énergie, etc. Un coefficient peut être associé à chacun de ces critère relatant son importance du point de vue du cultivateur selon s'il souhaite privilégier la quantité, la qualité, la consommation en eau etc.

A l'issue de plusieurs récoltes (par exemple, au moins trois récoltes) le système pourra donc disposer pour chacune : un retour d'expérience comportant un profil hydrique évoluant tout au long de la phase de culture ; un ensemble de notes décrivant l'efficience de la culture ; et un ensemble de coefficients déterminant les objectifs prioritaires du cultivateur ou agriculteur.

Avantageusement, le contrôleur 3 est configuré pour déterminer les valeurs initiales $h_{i0}(t)$ de seuils adaptatifs représentatives du profil hydrique hi0(t) le mieux adapté au terrain, à la culture, à la météo et aux objectifs de l'agriculteur en traitant les données de retour d'expérience comportant l'évolution du profil hydrique tout au long de la phase de culture, et l'ensemble de notes et coefficients. Ce traitement peut être réalisé en utilisant des techniques de Machine Learning ou autres techniques d'IA connues pour l'homme du métier.

Ainsi, les nouvelles valeurs de seuils adaptatif peuvent être appliqués l'année suivante pour prendre en compte le retour d'expérience de la culture en cours.

La Fig. 3B illustre les étapes de pilotage de l'exploitation agricole dans la phase d'arrêt de l'irrigation. Le processus de commander la fin de la période d'irrigation est similaire à celui de la Fig. 3A.

L'étape E00 est une étape d'initialisation où les différents paramètres et variables sont définis comme par exemple, les seuils adaptatifs d'arrêt initiaux $h'_{10}(t), .... h'_{i0}(t), ..., h'_{n0}(t)$.

A l'étape E11, les circuits électriques résonants et capteurs de température d'un dispositif de mesure réalisent des mesures courantes de fréquences $F_1, .... F_i, ..., F_n$ et de températures $T_1, .... T_i, ..., T_n$ correspondantes sur plusieurs profondeurs du sol référencés par l'indice « i ». Le microcontrôleur 21 du dispositif de mesure 5 réalise un calcul sur les mesures courantes de fréquences et de températures pour déterminer des valeurs courantes correspondantes d'humidité $H_1, .... H_i, ..., H_n$ sur les différents profondeurs du sol.

A l'étape E12 le contrôleur 33 reçoit un ensemble de valeurs courantes d'humidité $H_1, .... H_i, ..., H_n$ sur plusieurs profondeurs du sol depuis les dispositifs de mesure 5. Le contrôleur 33 réalise une comparaison entre l'ensemble des valeurs courantes d'humidité $H_1, .... H_i, ..., H_n$ et d'un deuxième ensemble des valeurs courantes correspondantes de seuils adaptatifs d'arrêt de l'irrigation $h'_{1j}(t), .... h'_{ij}(t), ..., h'_{nj}(t)$. Ce deuxième ensemble de seuils adaptatif d'arrêt est représentatif d'un deuxième profil hydrique maximal basé sur le type de culture en fonction de la maturité des plantes et le type du sol. Les seuils adaptatifs d'arrêt initiaux $h'_{10}(t), .... h'_{i0}(t), ..., h'_{n0}(t)$ sont prédéterminées (à l'étape E00) à partir d'une ou de plusieurs sources décrites en référence à la Fig. 3A. Pour chaque profondeur d'indice i, la valeur $H_i$ de l'humidité est comparée à la valeur correspondante du seuil adaptatif d'arrêt $h'_{ij}(t)$. Les différents résultats de ces comparaisons forment un ensemble de configurations de comparaisons différentes $C'1, ..., C'm$. Plusieurs configurations critiques peuvent être considérées par un expert comme étant représentatives d'un état hydrique nécessitant l'arrêt de l'irrigation. Par exemple, une configuration critique peut être celle dans laquelle les valeurs d'au moins un sous ensemble de valeurs courantes d'humidité sont dépassées par les valeurs courantes correspondantes de seuils adaptatifs d'arrêt.

Comme précédemment toutes les configurations critiques peuvent être regroupées dans un sous-ensemble spécifique de configurations $C'1, ..., C'k$. Ainsi, si la comparaison des valeurs courantes d'humidité avec les valeurs courantes correspondantes de seuils adaptatifs d'arrêt forme une configuration de comparaison courante appartenant au sous-ensemble spécifique de configurations $C'1, ..., C'k$, alors on passe à l'étape E13 et sinon, on revient à l'étape E11 pour des nouvelles mesures de l'humidité.

L'étape E13 concerne le cas où la configuration courante appartient au sous-ensemble spécifique de configurations, c'est-à-dire, la comparaison des valeurs $H_i$ de l'humidité avec les valeurs correspondantes du seuil adaptatif d'arrêt $h'_{ij}(t)$ est estimée convenable pour la plante et pour la capacité du sol à retenir l'eau. Alors, le contrôleur transmet une alerte d'arrêt de l'irrigation à l'utilisateur.

A l'étape E14, l'utilisateur peut confirmer ou non l'arrêt de l'arrosage selon son savoir-faire sur la base des observations relatives à l'état des plantes et du sol et/ou selon les données et pronostiques météos. Si l'utilisateur valide l'alerte alors on passe à l'étape E15 et sinon, on passe à l'étape E17.

L'étape E15 concerne le cas où l'utilisateur confirme l'arrêt de l'arrosage, alors le contrôleur transmet une commande à au moins un actionneur 9 pour arrêter l'irrigation.

A l'étape E16, au moment de la fermeture des vannes d'arrosage, le contrôleur est configuré pour enregistrer les valeurs courantes d'humidité $H_1, .... H_i, ..., H_n$ de la configuration critique pour calculer de nouvelles valeurs de seuils adaptatifs d'arrêt. L'indice de commande 'j' est incrémenté (i.e. j=j+1) et les nouvelles valeurs $h'_{ij}(t)$ de seuils adaptatifs sont déterminées en fonction des valeurs courantes d'humidité $H_i$ et des seuils adaptatifs d'arrêt initiaux $h_{i0}(t)$. Comme précédemment et à titre d'exemple, les nouvelles valeurs $h'_{ij}(t)$ de seuils adaptatifs d'arrêt sont calculées selon une moyenne arithmétique pondérée :

$$h'_{ij}(t) = aH_i + (1-a)\, h'_{i0}(t) \quad \text{où } 0 < a \le 1$$

En variante, les nouvelles valeurs $h'_{ij}(t)$ de seuils adaptatifs d'arrêt peuvent être déterminées en fonction des valeurs courantes d'humidité $H_i$ et des seuils adaptatifs précédents $h'_{i(j-1)}(t)$. Ces nouvelles valeurs $h'_{ij}(t)$ de seuils adaptatifs peuvent aussi être calculées selon une moyenne arithmétique pondérée :

$$h'_{ij}(t) = aH_i + (1-a)\, h'_{i(j-1)}(t) \quad \text{où } 0 < a \le 1$$

Ainsi, les seuils adaptatifs d'arrêt vont se réajuster au fur et à mesure des retours d'expériences.

Avantageusement, les nouvelles valeurs de seuils adaptatifs sont enregistrées pour éventuellement pouvoir être analysées ultérieurement par un algorithme d'intelligence artificielle.

L'étape E17, concerne le cas où l'utilisateur ne valide pas l'alerte transmise à l'étape E3. En effet, l'utilisateur peut estimer selon son savoir-faire et les observations que ce n'est pas le moment d'arrêter l'arrosage. Dans ce cas, le contrôleur se met en attente pendant une durée prédéterminée (par exemple, quelques heures) qui peut être définie par un expert selon la nature de la récolte, du sol et de la période de l'année. Deux cas de figures sont possibles. Dans un premier cas, l'utilisateur décide de valider l'alerte avant la fin de la durée prédéterminée. Dans un deuxième cas, la durée prédéterminée est consumée sans que l'utilisateur ait validé l'arrêt de l'arrosage. A l'issu de l'un ou de l'autre cas, des nouvelles mesures d'humidité sont réalisées avant de reboucler sur l'étape E15 pour déclencher l'arrêt de l'irrigation et pour ensuite déterminer à l'étape E16 de nouvelles valeurs de seuils adaptatifs d'arrêt en fonction de ces nouvelles valeurs courantes d'humidité $H_i$ et les valeur des seuils adaptatifs d'arrêt initiaux $h_{i0}(t)$ (ou les valeurs précédentes $h_{ij}(t)$ de seuils adaptatifs d'arrêt).

L'étape E18 concerne le cas où l'utilisateur prend l'initiative selon les observations et son propre expertise d'arrêter l'irrigation (étape E15) sans attendre de recevoir une alerte. A tout moment, même avant le message d'alerte l'utilisateur peut décider d'arrêter l'irrigation soit à l'issue d'une durée d'arrosage qu'il considère suffisante, soit au regard du profil hydrique courant, ou soit en cas de saturation en eau du sol (observation visuelle).

Dans ce cas de figure également, des nouvelles mesures d'humidité sont réalisées et on passe à l'étape E16 pour déterminer de nouvelles valeurs de seuils adaptatifs.

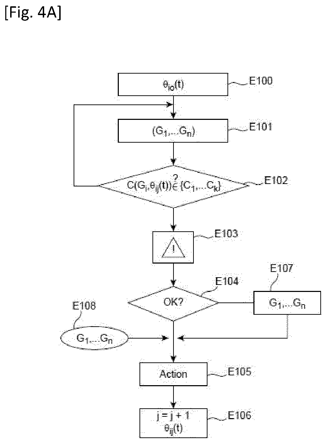

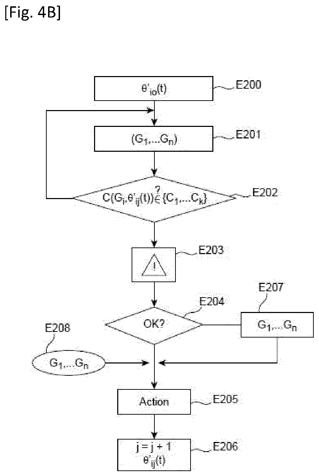

Les Figs. 4A et 4B illustrent très schématiquement le système de pilotage selon des phases de démarrage et d'arrêt d'irrigation respectivement, selon un autre mode de réalisation préféré de la présente invention.

Ce mode de réalisation implique un contrôleur faisant appel à des capacités de calcul plus importantes et qui prenne en compte des données météorologiques avec éventuellement la notion d'évapotranspiration.

La Fig. 4A illustre les étapes de pilotage de l'exploitation agricole dans la phase de démarrage de l'irrigation.

L'étape E100 est une étape d'initialisation où les différents paramètres et variables sont définis comme par exemple, les seuils adaptatifs de démarrage initiaux $\Theta_{10}(t),.... \Theta_{i0}(t),..., \Theta_{n0}(t)$. Comme précédemment, ces seuils adaptatifs de démarrage initiaux sont déterminés à partir des sources comportant des documents techniques d'irrigation, des connaissances académiques, un savoir-faire de l'agriculteur, un modèle basé sur des données météorologiques, des annotations issues des précédentes récoltes (le volume de la récolte, sa qualité gustative, la consommation d'eau, le traitement des maladies, etc.).

A l'étape E101, les circuits électriques résonants et capteurs de température d'un dispositif de mesure réalisent des mesures courantes de fréquences $F_1,.... F_i,..., F_n$, de températures $T_1,.... T_i,..., T_n$ et de conductivités correspondantes sur plusieurs profondeurs du sol référencés par l'indice « $i$ ». D'autres capteurs mesurent d'autres paramètres indépendamment des profondeurs comprenant les paramètres suivants: luminosité, vitesse du vent, pluviométrie, températures et humidités ambiantes, et prévision de précipitation. Des variables pertinentes $G_1,.... G_i,..., G_n$ correspondantes relatives à l'irrigation sont extraites par le contrôleur à partir de tous ces paramètres.

Avantageusement, les variables pertinentes relatives à l'irrigation $G_1,.... G_i,..., G_n$ comprennent les variables suivantes : valeurs d'humidité sur plusieurs profondeurs du sol, vitesse de variation de l'humidité et de la température selon les différents profondeurs du sol, gradient hydrique, gradient de température, evatranspiration, réserve d'eau utile, conductivité. Ces variables sont des caractéristiques qui peuvent être issues des mesures tel que décrit précédemment ou calculées à partir de celles-ci.

A l'étape E102 le contrôleur 33 réalise une comparaison entre les valeurs courantes de l'ensemble de variables pertinentes relatives $G_1,.... Gi,..., G_n$ et les valeurs courantes correspondantes d'un premier ensemble de seuils adaptatifs de démarrage de l'irrigation $\Theta_{1j}(t),.... \Theta_{ij}(t),..., \Theta_{nj}(t)$. Ce premier ensemble de seuils adaptatifs de démarrage est représentatif d'un premier profil hydrique minimal basé sur le type de culture en fonction de la maturité des plantes et le type du sol. Ainsi, pour chaque profondeur d'indice $i$, la valeur courante de la variable pertinente $G_i$ est comparée à la valeur correspondante du seuil adaptatif de démarrage $\Theta_{ij}(t)$. Les

différents résultats de ces comparaisons forment un ensemble de configurations de comparaisons différentes C1,...,Cm. Plusieurs configurations critiques peuvent être considérées par un expert comme étant représentatives d'un état hydrique nécessitant l'irrigation. Par exemple, une configuration critique peut être celle dans laquelle les valeurs courantes d'au moins un sous ensemble de variables pertinentes dépassent les valeurs courantes correspondantes de seuils adaptatifs de démarrage.

Toutes les configurations critiques peuvent être regroupées dans un sous-ensemble spécifique de configurations de comparaisons C1,...,Ck. Ainsi, si la comparaison des valeurs courantes de valeurs de variables pertinentes avec les valeurs courantes correspondantes de seuils adaptatifs de démarrage forme une configuration courante appartenant au sous-ensemble spécifique de configurations C1,...,Ck, alors on passe à l'étape E103 et sinon, on revient à l'étape E101 pour des nouvelles mesures.

A l'étape E103, suite au fait que la configuration courante appartient au sous-ensemble spécifique de configurations, le contrôleur transmet une alerte de démarrage de l'irrigation à l'utilisateur.

A l'étape E104, un tableau de bord avec des indicateurs adaptés à son usage est fourni par le contrôleur à l'utilisateur. Les indicateurs peuvent être calculés par le contrôleur à partir des valeurs des différentes variables pertinentes. En consultant le tableau de bord, l'utilisateur peut confirmer ou non l'arrosage selon son savoir-faire sur la base de ses propres observations relatives à l'état des plantes et du sol et/ou selon les données et pronostiques météos. Si l'utilisateur valide l'alerte alors on passe à l'étape E105 et sinon, on passe à l'étape E107.

L'étape E105 concerne le cas où l'utilisateur confirme l'arrosage, alors le contrôleur transmet une commande à au moins un actionneur (9) pour déclencher le démarrage de l'irrigation de l'installation d'irrigation.

A l'étape E106, au moment de l'ouverture des vannes d'arrosage, le contrôleur est configuré pour enregistrer les valeurs courantes des variables pertinentes $G_1,.... G_i,..., G_n$ de la configuration critique pour calculer de nouvelles valeurs de seuils adaptatifs. L'indice de commande 'j' est incrémenté (i.e. j=j+1) et les nouvelles valeurs $\Theta_{ij}(t)$ de seuils adaptatifs sont déterminées en fonction des valeurs courantes des variables pertinentes $G_i$ et des valeurs initiales $\Theta_{i0}(t)$ de seuils adaptatifs de démarrage valeurs $\Theta_{i(j)}(t)$ de seuils adaptatifs de démarrage. A titre d'exemple, les nouvelles valeurs $\Theta_{ij}(t)$ de seuils adaptatifs sont calculées selon une moyenne arithmétique pondérée :

$$\Theta_{ij}(t) = aG_i + (1-a)\,\Theta_{i0}(t) \quad \text{où}\ \ 0 < a \le 1$$

En variante, les nouvelles valeurs $\Theta_{ij}(t)$ de seuils adaptatifs sont déterminées en fonction des valeurs courantes des variables pertinentes $G_i$ et des valeurs précédentes $\Theta_{ij}(t)$ de seuils adaptatifs de démarrage. Les nouvelles valeurs $\Theta_{ij}(t)$ de seuils adaptatifs peuvent être calculées selon une moyenne arithmétique pondérée.

Ainsi, les seuils adaptatifs de démarrage vont se réajuster au fur et à mesure des retours d'expériences créant ainsi un apprentissage automatique du système de pilotage.

Avantageusement, les nouvelles valeurs de seuils adaptatifs sont enregistrées pour éventuellement pouvoir être analysées ultérieurement par un algorithme d'intelligence artificielle.

L'étape E107, concerne le cas où l'utilisateur ne valide pas l'alerte transmise à l'étape E103. En effet, l'utilisateur peut estimer selon les observations et son savoir-faire que ce n'est pas le moment d'arroser. Dans ce cas, le contrôleur se met en attente pendant une durée prédéterminée « Timeout ». Deux cas de figures sont possibles. Dans un premier cas, l'utilisateur décide de valider l'alerte avant la fin de la durée prédéterminée. Dans un deuxième cas, la durée prédéterminée est consumée sans que l'utilisateur ait validé l'arrosage. A l'issu de l'un ou de l'autre cas, des nouvelles variables pertinentes sont déterminées avant de reboucler sur l'étape E5 pour déclencher l'irrigation et pour ensuite déterminer à l'étape E106 de nouvelles valeurs de seuils adaptatifs en fonction de ces nouvelles valeurs courantes de variables pertinentes $G_i$ et les valeurs initiales $\Theta_{i0}(t)$ de seuils adaptatifs de démarrage (ou les valeurs précédentes $\Theta_{i(j-1)}(t)$ de seuils adaptatifs de démarrage).

L'étape E108 concerne le cas où l'utilisateur prend l'initiative selon les observations et son propre expertise de déclencher l'irrigation sans attendre de recevoir une alerte. Dans ce cas de figure également, des nouvelles variables pertinentes sont déterminées et on passe à l'étape E106 pour déterminer de nouvelles valeurs de seuils adaptatifs.

Comme pour le mode de réalisation précédent, au terme de la récolte, le cultivateur peut noter un ensemble de critères de réussite : poids de la récolte, qualité gustative (échèle de 1 à 10), présence de maladie ou de ravageurs, consommation en eau ou en énergie, etc. Un coefficient peut être associé à chacun de ces critère relatant son importance du point de vue du cultivateur selon s'il souhaite privilégier la quantité, la qualité, la consommation en eau etc.

A l'issue de plusieurs récoltes (par exemple, au moins trois récoltes) le système pourra donc disposer pour chacune : un retour d'expérience comportant un ensemble de caractéristiques (incluant le profil hydrique mais aussi l'ensemble de dispositifs de mesure d'imagerie, de dendrométrie, de tensiométrie, de mesures de références...) évoluant tout au long de la phase de culture ; un ensemble de notes décrivant l'efficience de la culture ; et un ensemble de coefficients déterminant les objectifs prioritaires du cultivateur ou agriculteur.

Avantageusement, le contrôleur 3 est configuré pour déterminer les valeurs initiales $h_{i0}(t)$ de seuils adaptatifs représentatives du profil hydrique $hi0(t)$ le mieux adapté au terrain, à la culture, à la météo et aux objectifs de l'agriculteur en traitant les données de retour d'expérience comportant l'ensemble de caractéristiques, de notes et de coefficients. Ce traitement peut être réalisé en utilisant des techniques de Machine Learning ou autres techniques d'IA connues pour l'homme du métier.

La Fig. 4B illustre les étapes de pilotage de l'exploitation agricole dans la phase d'arrêt de l'irrigation.

Les étapes E200-E208 sont similaires à celles de la Fig. 4A à part le fait qu'à l'étape E202, le contrôleur 33 réalise une comparaison entre les valeurs courantes de l'ensemble de variables pertinentes $G_1,.... G_i,..., G_n$ et des valeurs courantes correspondantes d'un deuxième ensemble de seuils adaptatifs d'arrêt de l'irrigation $\Theta'_{1j}(t),.... \Theta'_{ij}(t),..., \Theta'_{nj}(t)$. Ce deuxième ensemble de seuils adaptatifs de démarrage est représentatif d'un deuxième profil hydrique maximal basé sur le type de culture en fonction de la maturité des plantes et le type du sol. Ainsi, pour chaque profondeur d'indice i, la valeur courante de la variable pertinente $G_i$ est comparée à la valeur courante correspondante du seuil adaptatif d'arrêt $\Theta'_{ij}(t)$. Les différents résultats de ces comparaisons forment un ensemble de configurations de comparaisons différentes $C1,...,Cm$. Plusieurs configurations de comparaisons critiques peuvent être considérées par un expert comme étant représentatives d'un état hydrique nécessitant l'irrigation. Par exemple, une configuration de comparaison critique peut être celle dans laquelle les valeurs d'au moins un sous ensemble de variables pertinentes sont dépassés par les valeurs courantes correspondantes de seuils adaptatifs de démarrage. Toutes les configurations critiques peuvent être regroupées dans un sous-ensemble spécifique de configurations de comparaisons $C1,...,Ck$. Ainsi, si la comparaison des valeurs courantes de mesures de variables pertinentes avec les valeurs courantes correspondantes de seuils adaptatifs d'arrêt forme une configuration de comparaison courante appartenant au sous-ensemble spécifique de configurations de comparaisons $C1,...,Ck$, alors on passe à l'étape E203 et sinon, on revient à l'étape E201 pour des nouvelles mesures.

On notera qu'à tout moment, même avant le message d'alerte l'utilisateur peut décider d'arrêter l'irrigation (étape E208) : soit à l'issue d'une durée d'arrosage qu'il considère suffisante, soit au regard du profil hydrique courant, soit en cas de saturation en eau du sol (observation visuelle), ou soit en cas de prochaines précipitations.

Les traitements de données ultérieurs pourront alors prendre en compte le fait que la durée d'arrosage dépend des prévisions météo associée aux objectifs de l'agriculteur.

Le procédé et système de pilotage selon l'invention est très simple à mettre en oeuvre tout en étant compatible à tous types de cultures, de sols, de méthode de mesures ou d'irrigation. Il prend en compte les connaissances de l'agriculteur, la spécificité du sol et du type de culture. Il permet de se passer d'un calibrage complexe des capteurs capacitifs en tenant compte des indicateurs issus des plantes et du sol. En outre, le système de pilotage est compatible avec des sondes et capteurs de faible consommation.

Bien entendu, diverses modifications peuvent être apportées par l'homme du métier à l'invention qui vient d'être décrite, uniquement à titre d'exemples non limitatifs.

## Revendications

1. Système de pilotage d'une installation d'irrigation comportant des dispositifs de mesure (5) destinés à mesurer des paramètres relatifs à l'exploitation agricole comprenant des mesures d'humidité sur plusieurs profondeurs du sol, **caractérisé en ce qu'**il comporte un contrôleur (33) configuré pour contrôler l'irrigation sur la base de comparaisons entre de valeurs courantes d'humidité sur plusieurs profondeurs du sol reçues depuis les dispositifs de mesure (5) et de valeurs courantes correspondantes de seuils adaptatifs évoluant dans le temps et prenant en compte de manière continue l'évolution des plantes et le savoir-faire agricole spécifique à l'exploitation concernée.

2. Système selon la revendication 1, **caractérisé en ce que** le contrôleur (33) est configuré pour contrôler le démarrage et l'arrêt de l'irrigation sur la base d'un premier ensemble de seuils adaptatifs de démarrage d'irrigation et d'un deuxième ensemble de seuils adaptatifs d'arrêt d'irrigation, respectivement.

3. Système selon la revendication 2, **caractérisé en ce que** les premiers et deuxièmes ensembles de seuils adaptatifs de démarrage et d'arrêt d'irrigation sont représentatifs de premier et deuxième profils hydriques minimal et maximal respectivement, basés sur le type de culture en fonction de la maturité des plantes et le type du sol.

4. Système selon l'une quelconque des revendications précédentes, **caractérisé en ce que** le contrôleur (33) est configuré pour transmettre une alerte de démarrage ou d'arrêt de l'irrigation si la comparaison des valeurs courantes d'humidité avec les valeurs courantes correspondantes de seuils adaptatifs de démarrage ou d'arrêt forme une configuration de comparaison courante appartenant à un sous-ensemble spécifique et prédéterminé de configurations de comparaisons.

5. Système selon l'une quelconque des revendications 2 à 4, **caractérisé en ce que** le contrôleur (33) est configuré pour mettre à jour les valeurs de seuils adaptatifs de démarrage ou d'arrêt de l'irrigation en fonction des valeurs courantes d'humidité et des valeurs de seuils adaptatifs de démarrage ou d'arrêt respectivement.

6. Système selon la revendication 5, **caractérisé en ce que** les nouvelles valeurs de seuils adaptatifs de démarrage ou d'arrêt sont calculées selon une moyenne arithmétique pondérée.

7. Système selon l'une quelconque des revendications 4 à 6, **caractérisé en ce que** le contrôleur (33) est configuré pour commander automatiquement au moins un actionneur (9) de l'installation d'irrigation après une durée prédéterminée au cas où l'alerte n'a pas été validé par l'utilisateur.

8. Système selon l'une quelconque des revendications précédentes, **caractérisé en ce que** le contrôleur (33) est configuré pour utiliser les paramètres relatifs à l'exploitation agricole pour générer des valeurs courantes de variables pertinentes relatives à l'irrigation comprenant des valeurs courantes d'humidité sur plusieurs profondeurs du sol et pour contrôler l'irrigation sur la base de comparaisons entre les valeurs courantes de variables pertinentes relatives à l'irrigation et de valeurs courantes correspondantes de seuils adaptatifs tout en tenant compte d'un savoir-faire agricole.

9. Système selon la revendication 8, **caractérisé en ce que** les paramètres relatifs à l'exploitation agricole comportent une partie des caractéristiques suivantes : luminosité, vitesse du vent, pluviométrie, températures et humidités ambiantes, et prévision de précipitation, et **en ce que** les variables pertinentes relatives à l'irrigation comprennent les valeurs d'humidité sur plusieurs profondeurs du sol, vitesse de variation de l'humidité et de la température selon les différents profondeurs du sol, gradient hydrique, gradient de température, évapotranspiration, réserve d'eau utile, et besoin en nutrition.

10. Système selon l'une quelconque des revendications 5 à 9, **caractérisé en ce que** le contrôleur (33) est configuré pour enregistrer les nouvelles valeurs de seuils adaptatifs à chaque démarrage ou arrêt de l'arrosage.

11. Système selon la revendication 10, **caractérisé en ce que** le contrôleur (33) est configuré pour déterminer les valeurs initiales $h_{i0}(t)$ de seuils adaptatifs représentatives du profil hydrique $hi0(t)$ le mieux adapté au terrain, à la culture, à la météo et aux objectifs de l'agriculteur en traitant les données de retour d'expérience sur les récoltes.

12. Installation d'irrigation d'une exploitation agricole comportant le système de pilotage selon l'une quelconque des revendications précédentes, **caractérisé en ce qu'**il comporte en outre :

   - un ensemble de dispositifs de mesure (5) configurés pour faire des mesures sur les plantes, le sol, et l'air de l'exploitation agricole (13), et pour transmettre les mesures au système de pilotage (3), et
   - un ensemble d'actionneurs (9) configurés pour actionner ou arrêter l'irrigation selon la commande reçue depuis le système de pilotage.

13. Installation d'irrigation selon la revendication 12, **caractérisé en ce qu'**un dispositif de mesure (5) comporte un tube (15) en matériau isolant équipé de capteurs capacitifs (17a, 17b) de mesure d'humidité, un module d'alimentation (19), un module d'acquisition et de traitement (21) et un module de communication (23).

14. Procédé de pilotage d'une installation d'irrigation comportant des dispositifs de mesure (5) destinés à mesurer des paramètres relatifs à l'exploitation agricole comprenant des mesures d'humidité sur plusieurs profondeurs du sol, **caractérisé en ce qu'**il comporte
un control de l'irrigation sur la base de comparaisons entre de valeurs courantes d'humidité sur plusieurs profondeurs du sol reçues depuis les dispositifs de mesure (5) et de valeurs courantes correspondantes de seuils adaptatifs évoluant dans le temps tout en tenant compte de manière continue l'évolution des plantes et d'un savoir-faire agricole.

[Fig. 1]

[Fig. 2]

[Fig. 3A]

[Fig. 3B]

[Fig. 4A]

[Fig. 4B]

Europäisches
Patentamt

European
Patent Office

Office européen
des brevets

**RAPPORT DE RECHERCHE EUROPEENNE**

Numéro de la demande

EP 24 22 1063

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2010/147389 A1 (BLANCHARD ROD N [US]) 17 juin 2010 (2010-06-17) * alinéas [0008], [0035], [0042] - [0048], [0058] - [0064]; figures 1-7 * | 1-14 | INV. A01G25/16 |
| X | US 2018/325050 A1 (BYE RANDALL E [US] ET AL) 15 novembre 2018 (2018-11-15) * alinéas [0232], [0248], [0251], [0256], [0339], [0340]; figures 49A,50 * | 1,14 | |
| A | US 2003/230638 A1 (DUKES MICHAEL D [US] ET AL) 18 décembre 2003 (2003-12-18) * alinéas [0037], [0044], [0045]; revendication 1; figures 1-2 * | 1,14 | |
| A | US 2013/223934 A1 (VEITSMAN ALEXANDER [IL] ET AL) 29 août 2013 (2013-08-29) * alinéa [0048] * | 3,11 | |
| A | US 2015/100168 A1 (OLIVER IAN JAMES [AU] ET AL) 9 avril 2015 (2015-04-09) * alinéas [0020], [0038]; figure 1 * | 4,13 | DOMAINES TECHNIQUES RECHERCHES (IPC) A01G |
| A | WO 2022/190124 A1 (WAYCOOL FOODS AND PRODUCTS PRIVATE LTD [IN]) 15 septembre 2022 (2022-09-15) * alinéas [0023], [0024]; figure 2 * | 1,14 | |
| A | US 2022/248616 A1 (YANG YANXIANG [US] ET AL) 11 août 2022 (2022-08-11) * revendication 1; figure 1 * | 1,14 | |

Le présent rapport a été établi pour toutes les revendications

| Lieu de la recherche | Date d'achèvement de la recherche | Examinateur |
|---|---|---|
| La Haye | 11 avril 2025 | Dagnelies, Joëlle |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

EP 4 573 888 A1

## ANNEXE AU RAPPORT DE RECHERCHE EUROPEENNE
## RELATIF A LA DEMANDE DE BREVET EUROPEEN NO.

EP 24 22 1063

La présente annexe indique les membres de la famille de brevets relatifs aux documents  brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-04-2025

| Document brevet cité au rapport de recherche | Date de publication | Membre(s) de la famille de brevet(s) | | Date de publication |
|---|---|---|---|---|
| US 2010147389 A1 | 17-06-2010 | US | 2010147389 A1 | 17-06-2010 |
| | | WO | 2010068950 A2 | 17-06-2010 |
| US 2018325050 A1 | 15-11-2018 | US | 2018325050 A1 | 15-11-2018 |
| | | WO | 2017085557 A1 | 26-05-2017 |
| US 2003230638 A1 | 18-12-2003 | AU | 2003237206 A1 | 12-12-2003 |
| | | US | 2003230638 A1 | 18-12-2003 |
| | | WO | 03099454 A2 | 04-12-2003 |
| US 2013223934 A1 | 29-08-2013 | EP | 2819504 A1 | 07-01-2015 |
| | | ES | 2661514 T3 | 02-04-2018 |
| | | US | 2013223934 A1 | 29-08-2013 |
| | | WO | 2013128384 A1 | 06-09-2013 |
| US 2015100168 A1 | 09-04-2015 | AU | 2014101142 A4 | 16-10-2014 |
| | | AU | 2014101143 A4 | 23-10-2014 |
| | | US | 2015081058 A1 | 19-03-2015 |
| | | US | 2015100168 A1 | 09-04-2015 |
| WO 2022190124 A1 | 15-09-2022 | US | 2024172610 A1 | 30-05-2024 |
| | | WO | 2022190124 A1 | 15-09-2022 |
| US 2022248616 A1 | 11-08-2022 | US | 2022248616 A1 | 11-08-2022 |
| | | WO | 2021007363 A1 | 14-01-2021 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3115111